# EUROPEAN PATENT SPECIFICATION

(11) **EP 2 908 061 B1**
(45) Date of publication and mention of the grant of the patent: **16.10.2019**
(21) Application number: 15152963.3
(22) Date of filing: 29.01.2015
(51) Int. Cl.: F24F 1/10, F24F 1/46, F24F 1/56

(54) **Outdoor Unit of Air-Conditioner**
Außeneinheit einer klimaanlage
Unité extérieure pour climatiseur

(30) Priority: 14.02.2014 JP 2014026756
(43) Date of publication of application: 19.08.2015
(73) Proprietor: Panasonic Intellectual Property Management Co., Ltd., Osaka-shi, Osaka 540-6207 (JP)
(72) Inventor: Wada, Masanobu, Osaka-shi, Osaka 540-6207 (JP); Matsui, Masaru, Osaka-shi, Osaka 540-6207 (JP); Nishiyama, Yoshitsugu, Osaka-shi, Osaka 540-6207 (JP); Masuda, Tetsuya, Osaka-shi, Osaka 540-6207 (JP); Iitaka, Seishi, Osaka-shi, Osaka 540-6207 (JP)
(74) Representative: Grünecker Patent- und Rechtsanwälte PartG mbB

(56) References cited:
- EP-A2- 2 354 683
- WO-A1-2013/080772
- JP-A- 2003 056 931
- JP-A- 2013 250 004

## Description

### BACKGROUND

### 1. Technical Field

The present disclosure relates to an outdoor unit of an air conditioner including a non-power-supply driving compressor and a power-supply driving compressor, the non-power-supply driving compressor being driven by an engine and the power-supply driving compressor being driven by electric power.

### 2. Description of the Related Art

The operation efficiency of a gas heat pump as an air conditioner is reduced due to a reduction in the thermal efficiency of a gas engine when a partial load is applied. In order to prevent this, what is called a hybrid outdoor unit including a power-supply driving compressor and a non-power-supply driving compressor is proposed (refer to, for example, Japanese Unexamined Patent Application Publication No. 2003-56931). In the hybrid outdoor unit, the power-supply driving compressor having a displacement that is smaller than the displacement of the non-power-supply driving compressor that is driven by the gas engine is provided. When a partial load is applied, the power-supply driving compressor is primarily operated, whereas, when a high load is applied, the gas engine is primarily operated.

In hybrid outdoor units, the displacement of the non-power-supply driving compressor that is driven by the gas engine is larger than the displacement of the power-supply driving compressor, and components which are characteristic of gas heat pumps and which are not installed in electric heat pumps (such as exhaust mufflers and cooling water pumps) need to be installed.

Therefore, when the hybrid outdoor unit in Japanese Unexamined Patent Application Publication No. 2003-56931 is formed, it is desirable to add and dispose the power-supply driving compressor in the outdoor unit of the gas heat pump with the outdoor unit serving as a base.

In existing gas heat pumps, the interior of a body housing is divided into two portions, that is, an upper portion and a lower portion, by a partition plate (refer to, for example, Japanese Unexamined Patent Application Publication No. 2009-68750).

A first floor is a machine room. Many components are installed on the first floor. They are, for example, a gas engine, a non-power-supply driving compressor that is driven by the gas engine, an oil separator that separates refrigeration oil from discharge gas of the non-power-supply driving compressor, an exhaust muffler of the gas engine, a cooling water pump that circulates cooling water of the gas engine, and a control board.

A second floor is a heat exchanger room. An air blower including a fan and an orifice is provided at an upper surface of a heat exchanger room. By rotating the fan, the pressure in the heat exchanger room becomes negative, and air is taken in from an outer peripheral portion of an air heat exchanger. Air that has been subjected to heat exchange with a refrigerant at the air heat exchanger passes through the interior of the heat exchanger room and is discharged to the upper side of the housing from the orifice.

### SUMMARY

However, in the outdoor unit of the air conditioner of Japanese Unexamined Patent Application Publication No. 2003-56931, an engine compressor unit composed of an engine and a non-power-supply driving compressor driven by the engine is disposed on a substantially central position of a bottom plate of a machine room, and the center of gravity of the outdoor unit is disposed at the substantially central position of the bottom plate. Patent document WO-2013/080772-A describes another outdoor unit of an air conditioner, comprising a body housing defining therein a heat exchanger room and a machine room , two compressors, and a power-supply unit driving the compressor substantially disposed in a central portions of the machine room.

Accordingly, when a power-supply driving compressor is additionally disposed in the machine room, an space between the engine compressor unit and the power-supply driving compressor becomes narrow, and exhaust heat flows from the engine to the power-supply driving compressor. This may undesirably increase the temperature of the power-supply driving compressor and reduce the motor efficiency of the power-supply driving compressor, thereby reducing the efficiency of the power-supply driving compressor.

One non-limiting and exemplary embodiment provides an outdoor unit of an air conditioner in which both a non-power-supply driving compressor that is driven by an engine and a power-supply driving compressor that is driven by a motor are disposed in a machine room, the outdoor unit making it possible to reduce exhaust heat that flows from the engine to the power-supply driving compressor, thereby preventing a decrease in the motor efficiency caused by an increase in the temperature of the power-supply driving compressor and preventing a decrease in the efficiency of the power-supply driving compressor.

In one general aspect, the techniques disclosed here feature an outdoor unit of an air conditioner according to claim 1.

An outdoor unit of an air conditioner of the present disclosure makes it possible to reduce exhaust heat that flows from a driving source other than an electric power source to the power-supply driving compressor, thereby preventing the temperature of the power-supply driving compressor from becoming high. This prevents a decrease in the motor efficiency caused by an increase in the temperature of the power-supply driving compressor and prevents a decrease in the efficiency of the power-supply driving compressor.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

Fig. 1 shows a structure for a refrigeration cycle of an air conditioner according to an exemplary embodiment of the present disclosure;
Fig. 2 is a vertical cross-sectional view of an outdoor unit according to a first exemplary embodiment of the present disclosure;
Fig. 3 is a transverse cross-sectional view of the outdoor unit according to the first exemplary embodiment of the present disclosure;
Fig. 4 is a front view showing an operation of lifting up the outdoor unit according to the first exemplary embodiment of the present disclosure;
Fig. 5 is a side view showing an operation of lifting up the outdoor unit according to the first exemplary embodiment of the present disclosure;
Fig. 6 is a vertical cross-sectional view of the outdoor unit according to a second exemplary embodiment of the present disclosure;
Fig. 7 is a transverse cross-sectional view of the outdoor unit according to the second exemplary embodiment of the present disclosure;
Fig. 8 is a vertical cross-sectional view of an outdoor unit according to a third exemplary embodiment of the present disclosure; and
Fig. 9 is a transverse cross-sectional view of the outdoor unit according to the third exemplary embodiment of the present disclosure.

### DETAILED DESCRIPTION

An outdoor unit according to a first aspect of the present disclosure includes a body housing defining therein a heat exchanger room and a machine room that further defines two portions divided by a substantially vertical plane that includes a straight line passing a center of a bottom plate provided on a bottom of the machine room and extending in a depth direction of the machine room, and a power-supply driving compressor being driven by an electric power, and a non-power-supply driving compressor unit containing a driving source other than the electric power and a non-power-supply driving compressor being driven by the driving source other than the electric power. A substantially central position of the non-power-supply driving compressor unit is disposed in one of the two portions of the machine room and a substantially central position of the power-supply driving compressor is disposed in the other one of the two portions of the machine room.

This makes it possible to reduce exhaust heat that flows from the driving source, which is a driving source other than an electric power source, into the power-supply driving compressor, thereby preventing the temperature of the power-supply driving compressor from becoming high. This prevents a decrease in performance caused by an increase in the temperature of the electric power driving source of the power-supply driving compressor. Therefore, it is possible to prevent a decrease in performance of the power-supply driving compressor.

An outdoor unit according to a second aspect of the present disclosure may be arranged such that the housing body is divided into an upper portion and a lower portion.

This makes it possible to secure a wide interval between the non-power source compressor unit and the power-supply driving compressor even in a case where the power-supply driving compressor driven by electric power is additionally disposed in the machine room. This can reduce exhaust heat that flows from the driving source, which is a driving source other than an electric power source, into the power-supply driving compressor, thereby preventing a decrease in the efficiency of the electric power driving source caused by an increase in the temperature of the power-supply driving compressor. Therefore, it is possible to suppress a decrease in the efficiency of the power-supply driving compressor.

Furthermore, even in a case where the power-supply driving compressor driven by the electric power driving source is additionally disposed in the machine room, heavy objects are not lopsidedly disposed. This makes it possible to uniformly apply loads to a rope when the outdoor unit is lifted up for conveyance or installation of the outdoor unit without causing an unbalance in weight in the width direction of the outdoor unit. Therefore, it is possible to improve safety of the operation.

In the outdoor unit according to the first or second aspect, a third aspect of the present disclosure is arranged such that a horizontal direction distance J1 between a substantially central position of the non-power-supply driving compressor and the substantially central position of the power-supply driving compressor is shorter than a horizontal direction distance J2 between the substantially central position of the non-power source compressor unit and the substantially central position of the power-supply driving compressor.

Since the non-power-supply driving compressor is disposed between the driving source, which is a driving source other than an electric power source, and the power-supply driving compressor, the non-power-supply driving compressor functions as a heat insulating member against exhaust heat that flows from the driving source, which is a driving source other than an electric power source, to the power-supply driving compressor. This makes it possible to further reduce the exhaust heat that flows from the driving source, which is a driving source other than an electric power source, to the power-supply driving compressor. Therefore, it is possible to prevent a decrease in the efficiency caused by an increase in the temperature of the electric power driving source of the power-supply driving compressor.

In the outdoor unit according to any one of the first through third aspects, a fourth embodiment of the present disclosure is arranged such that at least one vent hole is provided in the partition plate, the vent hole allowing air in the outdoor unit to move between the heat exchanger room and the machine room..

With this arrangement, a ventilator through which air inside the outdoor unit is movable between the heat exchanger room and the machine room is secured. According to the present disclosure, it is therefore possible to secure a ventilation pathway through which exhaust heat of the driving source, which is a driving source other than an electric power source, provided in the machine room (the lower portion) is output to the outside of a body housing via the heat exchanger room, in addition to the effect of any one of the first through third aspects.

In the outdoor unit according to any one of the first through fourth aspects, a fifth aspect of the present disclosure is arranged such that a ventilation resistance of the vent hole during the non-operation of the non-power-supply driving compressor is larger than a ventilation resistance of the vent hole during the operation of the non-power-supply driving compressor.

This reduces the amount of air that moves from the machine room (the lower portion) to the heat exchanger room (the upper portion) only when the power-supply driving compressor is in operation, that is, when the non-power-supply driving compressor is not in operation and exhaust heat of the driving source, which is a driving source other than an electric power source, is not generated. According to the present disclosure, it is therefore possible to increase the amount of air that passes the heat exchanger only when the power-supply driving compressor is in operation, thereby improving the efficiency of operation of the air conditioner, in addition to the effect of any one of the first through fourth aspects.

In the outdoor unit according to any one of the first through fifth aspects, a sixth aspect of the present disclosure is arranged such that the non-power-supply-driving-compressor is provided at the heat exchanger room

Since the oil separator for the non-power-supply driving compressor is provided in the heat exchanger room (the upper portion) that is separated from the machine room (the lower portion), exhaust heat of the driving source, which is a driving source other than an electric power source, does not flow into refrigerant oil inside the oil separator for the non-power-supply driving compressor. This makes it possible to prevent a decrease in viscosity caused by an increase in the temperature of the refrigerant oil inside the oil separator of the non-power-supply driving compressor. According to the present disclosure, it is therefore possible to suppress a decrease in the viscosity of the refrigerant oil inside the oil separator of the non-power-supply driving compressor, thereby improving the reliability of the operation of the non-power-supply driving compressor, in addition to the effect of any one of the first through fifth aspects.

In the outdoor unit according to any one of the first through sixth aspects, a seventh aspect of the present disclosure is arranged such that an displacement of the non-power-supply driving compressor is larger than an displacement of the power-supply driving compressor.

Since the displacement volume of the non-power-supply driving compressor is larger than that of the power-supply driving compressor, for example, at low load, only the power-supply driving compressor having a small displacement volume is put into operation, and at medium to high load, both of the compressors are put into operation so that the load is most efficiently distributed between the compressors. At low load, exhaust heat of the non-power-supply driving compressor is not generated, and only the power-supply driving compressor is in operation. This makes it possible to prevent a decrease in the efficiency of the electric power driving source caused by an increase in the temperature of the power-supply driving compressor, thereby suppressing a decrease in the efficiency of the power-supply driving compressor. It is therefore possible to improve the efficiency of operation of the whole outdoor unit.

According to the present disclosure, it is possible to improve the efficiency of operation of the whole outdoor unit, in addition to the effect of any one of the first through sixth aspects.

In the outdoor unit according to any one of the first through seventh aspects, an eighth aspect of the present disclosure is arranged such that an inside diameter of each of a discharge pipe and a suction pipe included in the non-power-supply driving compressor is larger than an inside diameter of each of a discharge pipe and a suction pipe included in the power-supply driving compressor.

By thus thickening the ejection and intake pipes for the non-power-supply driving compressor whose displacement volume is larger and amount of flow of refrigerant is larger, an increase in pressure loss of the ejection and intake pipes for the non-power-supply driving compressor is suppressed, and an increase in exhaust heat of the driving source, which is a driving source other than an electric power source, caused by an increase in the load of the driving source, which is a driving source other than an electric power source, is suppressed. This makes it possible to reduce exhaust heat that flows from the driving source, which is a driving source other than an electric power source, into the power-supply driving compressor. It is therefore possible to prevent a decrease in the efficiency of the electric power driving source caused by an increase in the temperature of the power-supply driving compressor and thereby improve the efficiency of operation of the whole outdoor unit. That is, it is possible to increase the efficiency of operation of the whole outdoor unit, in addition to the effect of any one of the first through seventh aspects.

Embodiments of the present disclosure are described below with reference to the drawings. Note that the present disclosure is not limited to the embodiments.

### First Exemplary Embodiment

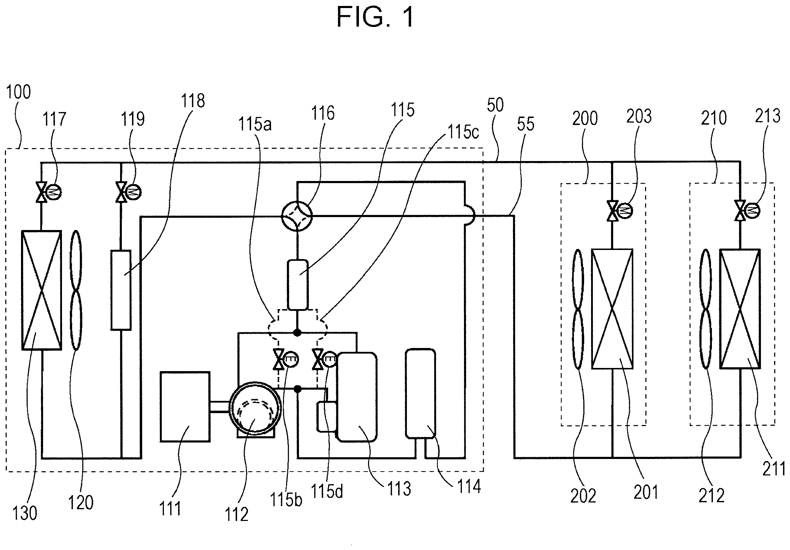

A structure for a refrigeration cycle of an air conditioner according to a first exemplary embodiment is shown in Fig. 1. The air conditioner shown in Fig. 1 has what is called a twin structure in which two indoor units are connected to one outdoor unit. The refrigeration cycle structure is not limited to that shown in Fig. 1. For example, two or more outdoor units and three or more indoor units may be connected in parallel.

Reference numeral 100 denotes an outdoor unit. The outdoor unit 100 is connected to indoor units 200 and 210 via a gas pipe 55 and a liquid pipe 50 in which a refrigerant flows. In the outdoor unit 100, reference numeral 111 denotes an engine, reference numeral 112 denotes an engine driving compressor (non-power-supply driving compressor), and reference numeral 113 denotes a power-supply driving compressor. The engine 111 uses other than an electric power source, for example, gas as a driving source. The engine driving compressor 112 receives driving force from the engine 111 and compresses a refrigerant. The power-supply driving compressor 113 includes a built-in motor and is driven by an electric power, such as a commercial power supply. The engine driving compressor 112 and the power-supply driving compressor 113 are connected in parallel in the refrigeration cycle. The displacement of the engine driving compressor 112 is greater than the displacement of the power-supply driving compressor 113. For a lubricant of the engine driving compressor 112 and that of the power-supply driving compressor 113, the same refrigeration oil is used.

A discharge pipe and a suction pipe at the engine driving compressor 112 are thicker than a discharge pipe and a suction pipe at the power-supply driving compressor 113. This reduces an increase in pressure loss at the discharge pipe and the suction pipe at the engine driving compressor 112 having a large refrigerant flow amount, and causes the amount of refrigeration oil returning to the engine driving compressor 112 from the refrigeration cycle to be larger than the amount of refrigeration oil returning to the power-supply driving compressor 113.

Reference numeral 114 denotes an accumulator. The accumulator 114 is connected to a refrigerant pipe extending from a four-way valve 116 (described later) to a meeting point of the suction pipe at the engine driving compressor 112 and the suction pipe at the power-supply driving compressor 113. The accumulator 114 supplies a gas refrigerant to both compressors.

Reference numeral 115 denotes an oil separator. The oil separator 115 is disposed at a refrigerant pipe extending from the four-way valve 116 (described later) to a meeting point of the discharge pipe at the engine driving compressor 112 and the discharge pipe at the power-supply driving compressor 113. The oil separator 115 separates refrigeration oils contained in discharge gases of both compressors all at once. The refrigeration oils separated by the oil separator 115 from the discharge gases are returned to the suction pipe at the engine driving compressor 112 via an oil return tube 115a, and to the suction pipe at the power-supply driving compressor 113 via an oil return tube 115c, so that the refrigeration oils are separately returned to the compressors. An oil-return-tube on-off valve 115b is provided at the oil return tube 115a, and an oil-return-tube on-off valve 115d is provided at the oil return tube 115c.

An oil separator 115 may be individually provided at each compressor. When oil separators 115 are individually provided, one oil separator 115 is provided at the discharge pipe at the engine driving compressor 112, and one oil separator 115 is provided at the discharge pipe at the power-supply driving compressor 113.

Reference numeral 116 denotes the four-way valve that switches the refrigeration cycle between cooling and heating. Reference numeral 117 denotes an outdoor-unit pressure reducing device that causes a refrigerant to expand. Reference numeral 118 denotes an engine exhaust-heat heat exchanger that causes heat exchanger to be performed between a refrigerant and high-temperature cooling water used in cooling the engine 111. The engine exhaust-heat heat exchanger 118 is used during the heating. A cooling-water pipe (not shown) is provided at the engine exhaust-heat heat exchanger 118.

Reference numeral 119 denotes a refrigerant -flow-amount adjusting valve that is provided for the engine exhaust-heat heat exchanger 118 and that adjusts the flow amount of a refrigerant that flows into the engine exhaust-heat heat exchanger 118. Reference numeral 120 denotes an outdoor blower fan that supplies air around the outdoor unit 100 to an outdoor-unit heat exchanger 130.

In the indoor unit 200, reference numeral 201 denotes an indoor air heat exchanger, reference numeral 202 denotes an indoor blower fan that supplies air around the indoor unit 200 to the indoor air heat exchanger 201, and reference numeral 203 denotes an indoor-unit pressure reducing device that causes a refrigerant to expand.

Similarly, the indoor unit 210 includes an indoor heat exchanger 211, an indoor blower fan 212 that supplies air surrounding the indoor unit 210 to the indoor heat exchanger 211, and an indoor unit decompression device 213 that expands refrigerant.

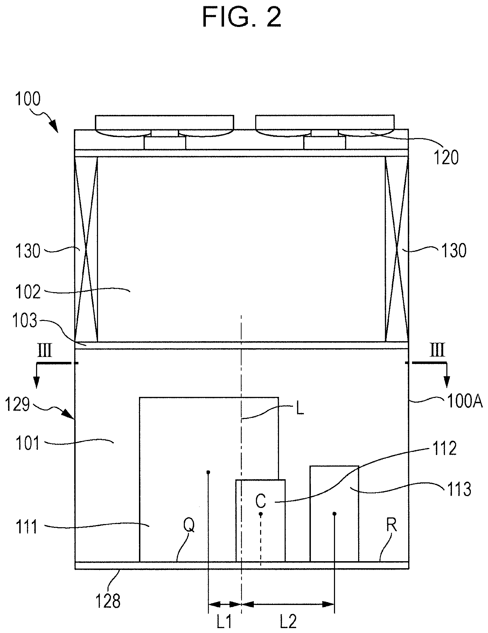

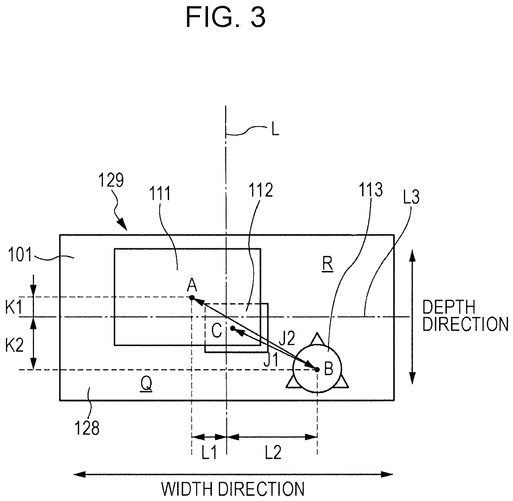

Fig. 2 is a vertical cross-sectional view of the outdoor unit 100 taken along a vertical plane parallel with a front surface of the outdoor unit 100, and Fig. 3 is a transverse cross-sectional view of the outdoor unit 100 taken along a horizontal plane (III-III in Fig. 2) parallel with a bottom surface of the outdoor unit 100. As shown in Fig. 2, a housing body 100A of the outdoor unit 100 is divided into upper and lower portions (a heat exchanger room 102 and a machine room 101) by a partition plate 103.

In the machine room 101, the engine 111 and the non-power-supply driving compressor 112 are provided, and the power-supply driving compressor 113 is further provided. In addition to these, many components such as the accumulator 114, the oil separator 115, the four-way valve 116, the outdoor unit decompression device 117, the engine exhaust heat exchanger 118, the refrigerant flow amount adjusting valve 119 for the engine exhaust heat exchanger 118, an exhaust muffler for the engine 111, a cooling water pump that circulates cooling water for the engine 111, a control substrate, and a refrigerant pipe, which are not shown, are provided in the machine room 101. The way in which these components are disposed in identical to that of an existing gas heat pump.

In the heat exchanger room 102, the outdoor heat exchanger 130 is provided so as to form an outer wall of the heat exchanger room 102. The outdoor blowers 120 are provided side by side on a top surface of the housing body 100A of the outdoor unit 100.

As shown in Figs. 2 and 3, a bottom plate 128 is disposed on the bottom of the machine room 101, and an engine compressor unit 129 composed by the engine 111 and the non-power-supply driving compressor 112 and the power-supply driving compressor 113 are provided on the bottom plate 128.

The bottom plate 128 has two portions Q and R separated by a horizontal line that passes a center L of the bottom plate 128 and extends in a depth direction of the machine room 101. A substantially central position (the point A in Fig. 3) of the engine compressor unit 129 composed by the engine 111 and the non-power-supply driving compressor 112 is disposed in the region Q, and a substantially central position (the point B in Fig. 3) of the power-supply driving compressor 113 including a driving motor is disposed in the region R.

As shown in Fig. 3, a horizontal direction distance J1 between a substantially central position (the point C in Fig. 3) of the non-power-supply driving compressor 112 and the substantially central position (the point B in Fig. 3) of the power-supply driving compressor 113 is shorter than a horizontal direction distance J2 between the substantially central position (the point A in Fig. 3) of the engine compressor unit 129 and the substantially central position (the point B in Fig. 3) of the power-supply driving compressor 113. The points A, B, and C are positions equivalent to the centers of gravity of the respective devices.

In the present embodiment, M1 × L1 is substantially equal to M2 × L2 where L1 is a width direction horizontal distance between the center L of the bottom plate 128 and the substantially central position A of the engine compressor unit 129, L2 is a width direction horizontal distance between the center L of the bottom plate 128 and the substantially central position B of the power-supply driving compressor 113, M1 is the mass of the engine compressor unit 129, and M2 is the mass of the power-supply driving compressor 113.

Furthermore, as shown in Fig. 3, M1 × K1 is substantially equal to M2 × K2 where K1 is a depth direction horizontal distance between a depth direction center L3 of the bottom plate 128 and the substantially central position A of the engine compressor unit 129, K2 is a depth direction horizontal distance between the center L3 of the bottom plate 128 and the substantially central position B of the power-supply driving compressor 113, M1 is the mass of the engine compressor unit 129, and M2 is the mass of the power-supply driving compressor 113.

Next, operations of the outdoor unit 100 and the indoor units 200 and 210 are described.

During a cooling operation, the four-way valve 116 is set so that a refrigerant flows along the solid line (see Fig. 1). The refrigerant of high temperature and high pressure that has been compressed by the engine-driven compressor 112 and the refrigerant of high temperature and high pressure that has been compressed by the power-supply driving compressor 113 converge and flow into the oil separator 115. A gas refrigerant of high purity separated from the refrigerant oil in the oil separator 115 passes the four-way valve 116 and then enters the outdoor heat exchanger 130. The gas refrigerant releases heat through heat exchange with outside air in the outdoor heat exchanger 130 and is then condensed to a liquid refrigerant of high pressure. Then, the liquid refrigerant is supplied to the indoor units 200 and 210 via the outdoor unit decompression device 117 and the liquid pipe 50.

Note that the refrigerant oil separated by the oil separator 115 is returned to the intake pipe for the engine-driven compressor 112 by opening the oil return pipe opening/closing valve 115b in a case where the engine-driven compressor 112 is being driven. Similarly, the refrigerant oil separated by the oil separator 115 is returned to the intake pipe for the power-supply driving compressor 113 by opening the oil return pipe opening/closing valve 115d in a case where the power-supply driving compressor 113 is being driven. The oil return pipe opening/closing valve 115b is closed in a case where the engine-driven compressor 112 is not driven, and the oil return pipe opening/closing valve 115d is closed in a case where the power-supply driving compressor 113 is not driven.

The liquid refrigerant of high pressure that has entered the indoor unit 200 becomes a gas-liquid two-phase state through decompression in the indoor unit decompression device 203 and then flows into the indoor heat exchanger 201. The refrigerant in the gas-liquid two-phase state absorbs heat in the indoor heat exchanger 201 through heat exchange with air in a space which is a target of air conditioning, and then evaporates into a gas refrigerant. Then, the gas refrigerant flows out from the indoor unit 200.

In the indoor unit 210 as well as in the indoor unit 200, first, the liquid refrigerant of high pressure becomes a gas-liquid two-phase state through decompression in the indoor unit decompression device 213 and then flows into the indoor heat exchanger 211. The refrigerant in the gas-liquid two-phase state absorbs heat in the indoor heat exchanger 211 through heat exchange with air in a space which is a target of air conditioning, and then evaporates into a gas refrigerant. Then, the gas refrigerant flows out from the indoor unit 210.

Note that in a case where only the indoor unit 200 performs a cooling operation, the indoor unit decompression device 213 is closed so that a refrigerant is not supplied to the indoor heat exchanger 211 of the indoor unit 210. Meanwhile, in a case where only the indoor unit 210 performs a cooling operation, the indoor unit decompression device 203 is closed so that a refrigerant is not supplied to the indoor heat exchanger 201 of the indoor unit 200.

The gas refrigerant that flowed out from the indoor units 200 and 210 returns to the outdoor unit 100 via the gas pipe 55. The gas refrigerant that has flowed into the outdoor unit 100 returns to the engine-driven compressor 112 and the power-supply driving compressor 113 via the four-way valve 116 and the accumulator 114.

During a cooling operation, the engine-driven compressor 112 and the power-supply driving compressor 113 operates, for example, as follows.

In a case where a cooling load is smaller than cooling capability achieved when the engine-driven compressor 112 operates at a minimum operating frequency (minimum cooling capability of the engine-driven compressor 112), the cooling operation becomes intermittent just by the engine-driven compressor 112, and therefore only the power-supply driving compressor 113 operates.

In a case where a cooling load is larger than a minimum cooling load of the engine-driven compressor 112 and smaller than cooling capability achieved when both of the engine-driven compressor 112 and the power-supply driving compressor 113 operate at a minimum operating frequency (minimum cooling capability achieved when both of the compressors operate), one of the engine-driven compressor 112 and the power-supply driving compressor 113, for example, one that requires lower operating cost or consumes lower energy is selected and put into operation.

In a case where a cooling load is larger than minimum cooling capability achieved when both of the compressors operate, both of the engine-driven compressor 112 and the power-supply driving compressor 113 are put into operation so that, for example, the operating cost or consumed energy becomes minimum.

In this case, the operating frequencies of the engine-driven compressor 112 and the power-supply driving compressor 113 that minimize the operating cost or consumed energy are determined by utilizing a relationship between the operating frequencies of the compressors and the operating cost or the consumed energy.

Actually, the proportion of the cooling load for which the engine-driven compressor 112 is responsible relative to the whole cooling load is approximately ±15% of the proportion of the cooling capability achieved when only the engine-driven compressor 112 operates at a maximum operating frequency relative to the maximum cooling capability achieved when both of the compressors operate at a maximum operating frequency (maximum cooling capability achieved when both of the compressors operate).

Next, during a heating operation, the four-way valve 116 is set so that a refrigerant flows along the dotted line (see Fig. 1). The refrigerant of high temperature and high pressure that has been compressed by the engine-driven compressor 112 and the refrigerant of high temperature and high pressure that has been compressed by the power-supply driving compressor 113 converge and flow into the oil separator 115. A gas refrigerant of high purity separated from the refrigerant oil in the oil separator 115 passes the four-way valve 116, exits the outdoor unit 100, passes the gas pipe 55, and is then supplied to the indoor units 200 and 210.

The gas refrigerant of high temperature and high pressure that has entered the indoor unit 200 flows into the indoor heat exchanger 201. The gas refrigerant of high temperature and high pressure releases heat in the indoor heat exchanger 201 through heat exchange with air in a space which is a target of air conditioning, and then condenses to a liquid refrigerant of high pressure. The liquid refrigerant passes the indoor unit decompression device 203 and then flows out from the indoor unit 200.

In the indoor unit 210 as well as in the indoor unit 200, first, the gas refrigerant of high temperature and high pressure flows into the indoor heat exchanger 211. The gas refrigerant of high temperature and high pressure releases heat in the indoor heat exchanger 211 through heat exchange with air in the space which is a target of air conditioning, and then condenses to a liquid refrigerant of high pressure. The liquid refrigerant passes the indoor unit decompression device 213 and then flows out from the indoor unit 210.

As in the case of cooling, in a case where only the indoor unit 200 performs a heating operation, the indoor unit decompression device 213 is closed so that a refrigerant is not supplied to the indoor heat exchanger 211 of the indoor unit 210. Meanwhile, in a case where only the indoor unit 210 performs a heating operation, the indoor unit decompression device 203 is closed so that a refrigerant is not supplied to the indoor heat exchanger 201 of the indoor unit 200.

The liquid refrigerant of high pressure that has flowed out from the indoor units 200 and 210 passes the liquid pipe 50 and returns to the outdoor unit 100. The liquid refrigerant of high pressure that has flowed into the outdoor unit 100 becomes a gas-liquid two-phase state through decompression in the outdoor unit decompression device 117 and then flows into the outdoor heat exchanger 130 and the engine exhaust heat exchanger 118. The refrigerant in the gas-liquid two-phase state evaporates after absorbing heat in the outdoor heat exchanger 130 through heat exchange with outside air and absorbing heat in the engine exhaust heat exchanger 118 with cooling water of high temperature used for cooling the engine 111, passes the four-way valve 116 and the accumulator 114, and then returns to the engine-driven compressor 112 and the power-supply driving compressor 113.

During a heating operation, the engine-driven compressor 112 and the power-supply driving compressor 113 operate, for example, as follows.

In a case where a heating load is smaller than heating capability achieved when the engine-driven compressor 112 operates at a minimum operating frequency (minimum heating capability of the engine-driven compressor 112), the heating operation becomes intermittent only by the engine-driven compressor 112, and therefore only the power-supply driving compressor 113 operates.

In a case where the heating load is larger than a minimum heating load of the engine-driven compressor 112 and smaller than heating capability achieved when both of the engine-driven compressor 112 and the power-supply driving compressor 113 operate at a minimum operating frequency (minimum heating capability achieved when both of the compressors operate), one of the engine-driven compressor 112 and the power-supply driving compressor 113, for example, one that requires lower operating cost or consumes smaller energy is selected and is put into operation.

In a case where the heating load is larger than the minimum heating capability achieved when both of the compressors operate, both of the engine-driven compressor 112 and the power-supply driving compressor 113 are put into operation so that, for example, the operating cost or consumed energy becomes minimum.

In this case, the operating frequencies of the engine-driven compressor 112 and the power-supply driving compressor 113 that minimize the operating cost or the consumed energy are determined by utilizing a relationship between the operating frequencies of the compressors and the operating cost or the consumed energy.

Actually, the proportion of the heating load for which the engine-driven compressor 112 is responsible relative to the whole heating load is approximately ±15% of the proportion of the heating capability achieved when only the engine-driven compressor 112 operates at a maximum operating frequency relative to the maximum heating capability achieved when both of the compressors operate at a maximum operating frequency (maximum heating capability achieved when both of the compressors operate).

Note, however, that during a heating operation, a frost formation state of the outdoor heat exchanger 130 is always monitored, and in a case where there is a possibility of frost formation, the operating frequency of the engine-driven compressor 112 is increased and the operating frequency of the power-supply driving compressor 113 is reduced even in a case where the operating frequencies of the compressors have been set so that the operating cost or the consumed energy becomes minimum.

When the operating frequency of the engine-driven compressor 112 is increased, the amount of exhaust heat of the engine 111 increases and the amount of heat of cooling water supplied to the engine exhaust heat exchanger 118 also increases. That is, it is possible to evaporate a larger amount of refrigerant in the engine exhaust heat exchanger 118. Thus, the amount of refrigerant that flows into the outdoor heat exchanger 130 is reduced, and thereby the possibility of frost formation is reduced.

As is clear from the above description, in the present embodiment, both of the engine compressor unit 129 and the power-supply driving compressor 113 are provided in the machine room 101, the bottom plate 128 is divided into two portions Q and R by the horizontal line L that extends in the depth direction of the machine room 101, the substantially central position (the point A in Fig. 3) of the engine compressor unit 129 is disposed in the region Q, the substantially central position (the point B in Fig. 3) of the power-supply driving compressor 113 is disposed in the region R. It is therefore possible to secure a wide interval between the engine compressor unit 129 and the power-supply driving compressor 113. This makes it possible to reduce exhaust heat that flows from the engine 111 to the power-supply driving compressor 113, thereby suppressing an increase in the temperature of the power-supply driving compressor 113 and preventing a decrease in the efficiency of the motor of the power-supply driving compressor 113. It is therefore possible to prevent a decrease in the efficiency of the power-supply driving compressor 113.

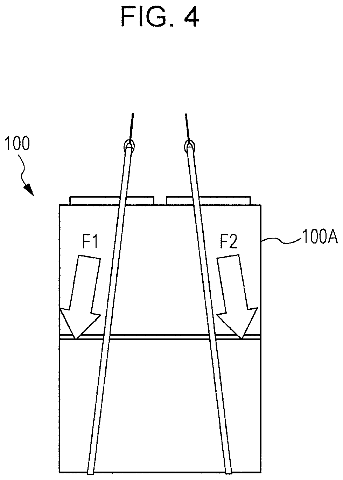

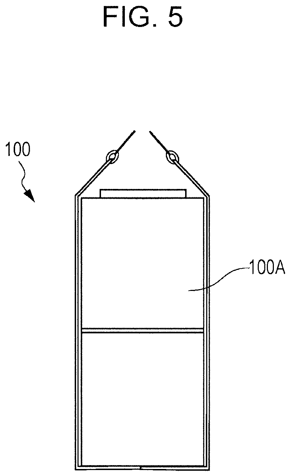

Figs. 4 and 5 are views for explaining an operation for lifting up the outdoor unit 100 of the air conditioner by a crane or the like.

In the present embodiment, the substantially central position (the point A in Fig. 3) of the engine compressor unit 129 is disposed in the region Q, and the substantially central position (the point B in Fig. 3) of the power-supply driving compressor 113 is disposed in the region R. This prevents heavy objects from being lopsidedly disposed when viewed in the width direction as shown in Figs. 4 and 5. That is, it is possible to secure weight balance in the width direction of the outdoor unit 100. This makes it possible to equalize loads F1 and F2 applied to a rope when the outdoor unit 100 is lifted up by a crane or the like. It is therefore possible to equalize loads applied to a rope when the outdoor unit 100 is lifted up for conveyance and installation by a crane, thereby improving safety of the operation.

Furthermore, in the present embodiment, as shown in Fig. 3, the horizontal direction distance J1 between the substantially central position C of the non-power-supply driving compressor 112 and the substantially central position B of the power-supply driving compressor 113 is shorter than the horizontal direction distance J2 between the substantially central position A of the engine compressor unit 129 and the substantially central position B of the power-supply driving compressor 113. It is therefore possible to dispose the power-supply driving compressor 113 in the vicinity of the non-power-supply driving compressor 112 in the machine room 101.

By disposing the non-power-supply driving compressor 112 between the power-supply driving compressor 113 and the engine 111, the non-power-supply driving compressor 112 functions as a heat insulating member against the exhaust heat flowing from the engine 111 to the power-supply driving compressor 113. This makes it possible to further reduce the exhaust heat that flows from the engine 111 to the power-supply driving compressor 113, thereby suppressing an increase in the temperature of the power-supply driving compressor 113 and preventing a decrease in the efficiency of the motor of the power-supply driving compressor 113. It is therefore possible to prevent a decrease in the efficiency of the power-supply driving compressor 113.

Furthermore, in the present embodiment, in a case where the cooling load is smaller than cooling capability achieved when the non-power-supply driving compressor 112 operates at a minimum operating frequency (minimum cooling capability of the non-power-supply driving compressor 112) and in a case where the heating load is smaller than heating capability achieved when the non-power-supply driving compressor 112 operates at a minimum operating frequency (minimum heating capability of the non-power-supply driving compressor 112), only the power-supply driving compressor 113 operates.

In this case, exhaust heat of the engine 111 is not generated. Accordingly, in a case where only the power-supply driving compressor 113 operates, it is possible to prevent a decrease in the motor efficiency caused by an increase in temperature of the power-supply driving compressor 113. This suppresses a decrease in the efficiency of the power-supply driving compressor 113 and therefore improves the operating frequency of the whole outdoor unit 100.

Furthermore, the inner diameters of the ejection and intake pipes for the non-power-supply driving compressor 112 are thicker than those of the ejection and intake pipes for the power-supply driving compressor 113. It is therefore possible to suppress an increase in pressure loss in the ejection and intake pipes for the non-power-supply driving compressor 112. Accordingly, it is possible to suppress an increase in exhaust heat caused by an increase in load of the engine 111. Consequently, it is possible to improve the operation efficiency of the whole outdoor unit 100.

In the present embodiment, as shown in Fig. 3, M1 × L1 is substantially equal to M2 × L2 where L1 is a width direction horizontal distance between the center L of the bottom plate 128 and the substantially central position A of the engine compressor unit 129, L2 is a width direction horizontal distance between the center L of the bottom plate 128 and the substantially central position B of the power-supply driving compressor 113, M1 is the mass of the engine compressor unit 129, M2 is the mass of the power-supply driving compressor 113.

This allows the moment produced by the mass of the engine compressor unit 129 and the moment produced by the mass of the power-supply driving compressor 113 to offset each other about the center of the outdoor unit 100 in the width direction. This allows the horizontal direction center of gravity in the width direction of the outdoor unit 100 to be substantially central. This makes it possible to uniformly apply the loads F1 and F2 (see Fig. 4) to a rope when the outdoor unit 100 of the air conditioner is lifted up by a crane or the like. It is therefore possible to safely perform carrying and installing operations.

Furthermore, as shown in Fig. 3, M1 × K1 is substantially equal to M2 × K2 where K1 is a depth direction horizontal distance between the depth direction center L3 of the bottom plate 128 and the substantially central position A of the engine compressor unit 129, K2 is a depth direction horizontal distance between the center of the bottom plate 128 and the substantially central position of the power-supply driving compressor 113, M1 is the mass of the engine compressor unit 129, and M2 is the mass of the power-supply driving compressor 113.

Therefore, the moment produced by the mass of the engine compressor unit 129 and the moment produced by the mass of the power-supply driving compressor 113 offset each other about the center of the outdoor unit 100 in the depth direction. This allows the horizontal direction center of gravity in the depth direction of the outdoor unit 100 to be substantially central. It is therefore possible to prevent the outdoor unit 100 from tilting in the depth direction when the outdoor unit 100 is lifted up (see Fig. 5), thereby improving the safety in the depth direction. It is therefore possible to safely perform the conveying and installing operations. Second Exemplary Embodiment

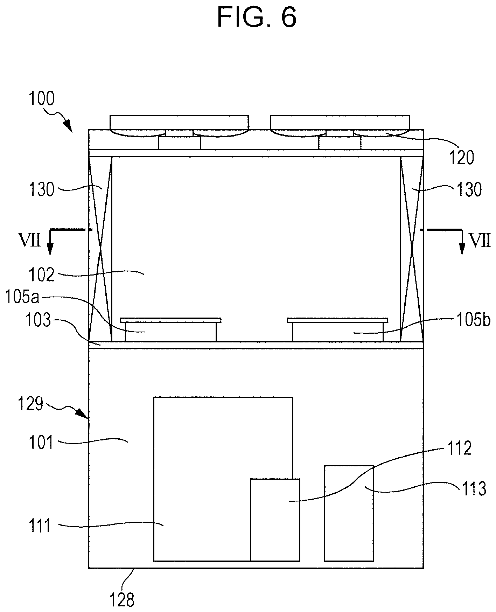

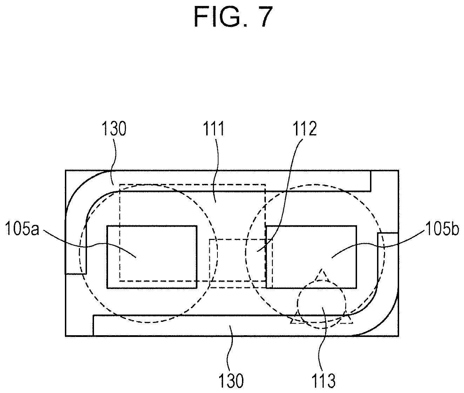

Fig. 6 is a vertical cross-sectional view of an outdoor unit 100 taken along a vertical plane parallel with the front surface of the outdoor unit 100, and Fig. 7 is a transverse cross-sectional view of the outdoor unit 100 taken along a horizontal plane (VII-VII in Fig. 7) parallel with the bottom surface of the outdoor unit 100.

In Figs. 6 and 7, ventilators 105a and 105b are provided on a partition plate 103 in the outdoor unit 100. The ventilators 105a and 105b are disposed almost symmetrically with respect to a straight line that halves the partition plate 103 in a width direction (the transverse direction in Fig. 7). Through the ventilators 105a and 105b, air inside the outdoor unit is movable between a machine room 101 and a heat exchanger room 102. The ventilators 105a and 105b are provided with an opening degree adjusting mechanism (not shown) for adjusting the opening degree of the ventilators 105a and 105b.

The other elements of the outdoor unit 100 are identical to those in the first exemplary embodiment, and therefore are not explained repeatedly. The cooling and heating operations of the outdoor unit 100 are identical to those in the first exemplary embodiment. The following describes operations of the ventilators 105a and 105b during the cooling and heating operations.

In a case where an engine 111 and a non-power-supply driving compressor 112 are in operation, fuel such as gas is burnt in the engine 111. Therefore, exhaust heat of high temperature is generated. The engine 111 is cooled by cooling water that circulates by a cooling water pump (not shown) provided in the machine room 101.

The cooling water whose temperature became high due to the exhaust heat of the engine 111 releases heat by a radiator (not shown) provided in the heat exchanger room 102 and then returns to the engine 111. The radiator is provided on the inner side of the outdoor heat exchanger 130 in the heat exchanger room 102 and is configured to exchange heat with air whose heat has been exchanged with a refrigerant in the outdoor heat exchanger 130.

The exhaust heat of the engine 111 cannot be completely removed only by the cooling water. In this case, the ventilators 105a and 105b are opened so that air in the machine room 101 escapes into the heat exchanger room 102 by operation of the outdoor blowers 120. This prevents the temperature of the machine room 101 from becoming high due to the exhaust heat of the engine 111.

Meanwhile, in a case where the engine 111 and the non-power-supply driving compressor 112 are not in operation and only the power-supply driving compressor 113 is in operation, exhaust heat of the engine 111 is not generated. Therefore, the ventilators 105a and 105b are closed. This stops movement of air from the machine room 101 to the heat exchanger room 102. Accordingly, the amount of air passing the outdoor heat exchanger 130 increases, and the efficiency of the whole refrigeration cycle improves, as compared with a case where the ventilators 105a and 105b are opened. Note that part of the ventilators 105a and 105b may be opened to cool a control substrate (not shown) provided in the machine room 101.

As is clear from the above description, in the present embodiment, the ventilators 105a and 105b are provided on the partition plate 103. This makes it possible to secure ventilation pathways through which the exhaust heat of the engine 111 of the machine room 101 exits to an outside of a main body chassis of the outdoor unit 100 via the heat exchanger room 102, in addition to the effects of the first exemplary embodiment.

Furthermore, in a case where the engine 111 and the non-power-supply driving compressor 112 are not in operation and only the power-supply driving compressor 113 is in operation, the ventilators 105a and 105c are closed so that movement of air from the machine room 101 to the heat exchanger room 102 is blocked. This increases the amount of air passing the outdoor heat exchanger 130, thereby improving the efficiency of the refrigeration cycle.

### Third Exemplary Embodiment

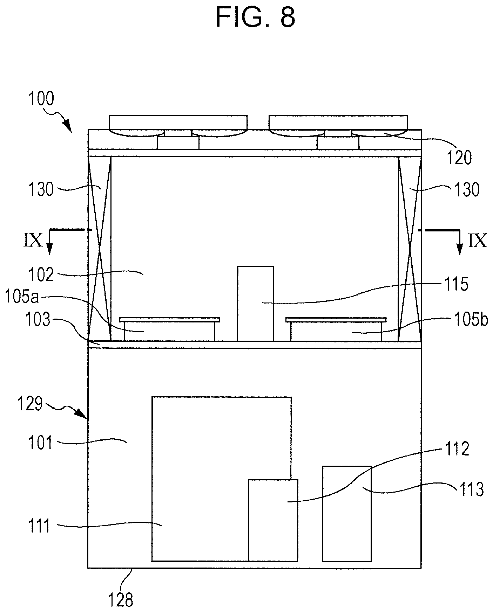

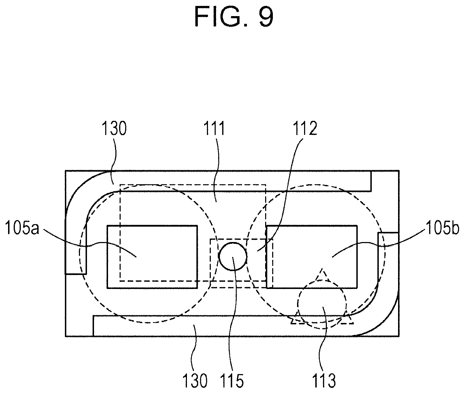

Fig. 8 is a vertical cross-sectional view of the outdoor unit 100 taken along a vertical plane parallel with a front surface of an outdoor unit 100, and Fig. 9 is a transverse cross-sectional view of the outdoor unit 100 taken along a horizontal plane (IV-IV in Fig. 8) parallel with a bottom surface of the outdoor unit 100.

In Figs. 8 and 9, an oil separator 115 is provided on a partition plate 103 in the outdoor unit 100. Furthermore, the flow path resistance of an oil return pipe 115a connected between the oil separator 115 and an intake pipe for a non-power-supply driving compressor 112 is set smaller than that of an oil return pipe 115c connected between the oil separator 115 and an intake pipe for a power-supply driving compressor 113. The setting of the flow path resistances of the oil return pipes 115a and 115c is adjusted, for example, by changing the internal diameter and length of a capillary tube provided in the oil return pipes.

The other elements are identical to those of the first exemplary embodiment and the second exemplary embodiment, and therefore are not explained repeatedly. Cooling and heating operations of the outdoor unit 100 are similar to those of the first exemplary embodiment and the second exemplary embodiment. The following describes an operation of returning oil from the oil separator 115 that is in operation to the non-power-supply driving compressor 112 and the power-supply driving compressor 113.

In a case where the non-power-supply driving compressor 112 is in operation, refrigerant oil separated by the oil separator 115 is returned to the intake pipe for the non-power-supply driving compressor 112 by opening an oil return pipe opening/closing valve 115b. Similarly, in a case where the power-supply driving compressor 113 is in operation, refrigerant oil separated by the oil separator 115 is returned to the intake pipe for the power-supply driving compressor 113 by opening an oil return pipe opening/closing valve 115d. In a case where the non-power-supply driving compressor 112 is in a resting state, the oil return pipe opening/closing valve 115b is closed, and in a case where the power-supply driving compressor 113 is in a resting state, the oil return pipe opening/closing valve 115d is closed.

The displacement volume of the non-power-supply driving compressor 112 is set larger than that of the power-supply driving compressor 113. Therefore, the amount of flow of a refrigerant ejected by the non-power-supply driving compressor 112 is larger than that of a refrigerant ejected by the power-supply driving compressor 113. Accordingly, the amount of refrigerant oil ejected by the non-power-supply driving compressor 112 is larger than that of refrigerant oil ejected by the power-supply driving compressor 113.

In the present embodiment, the oil separator 115 is provided on the partition plate 103 in the outdoor unit 100 so as to be provided in the heat exchanger room 102 that is separate from the machine room 101. Accordingly, exhaust heat of the engine 111 does not flow into the refrigerant oil in the oil separator 115. This prevents a decrease in viscosity caused by an increase in the temperature of the refrigerant oil in the oil separator 115.

The flow path resistance of the oil return pipe 115a is set smaller than that of the oil return pipe 115c. Accordingly, even in a case where both of the compressors are in operation, the amount of refrigerant oil that returns from the oil separator 115 to the non-power-supply driving compressor 112 is larger than that of refrigerant oil that returns from the oil separator 115 to the power-supply driving compressor 113.

As is clear from the above description, since the oil separator 115 is provided on the partition plate 103 in the outdoor unit 100, exhaust heat of the engine 111 does not flow into the refrigerant oil in the oil separator 115. It is therefore possible to suppress a decrease in viscosity caused by an increase in the temperature of the refrigerant oil in the oil separator 115, thereby improving the operation reliability of the non-power-supply driving compressor 112.

Furthermore, the flow path resistance of the oil return pipe 115a that is connected between the oil separator 115 and the intake pipe for the non-power-supply driving compressor 112 is set smaller than that of the oil return pipe 115c that is connected between the oil separator 115 and the intake pipe for the power-supply driving compressor 113.

Accordingly, even in a case where both of the compressors are in operation, the amount of refrigerant oil that returns from the oil separator 115 to the non-power-supply driving compressor 112 is larger than that of refrigerant oil that returns from the oil separator 115 to the power-supply driving compressor 113. It is therefore possible to further improve the operation reliability of the non-power-supply driving compressor 112 that ejects a large amount of refrigerant oil.

The present disclosure has been described so far on the basis of the embodiments, but the present disclosure is not limited to the embodiments. In the above description, two portions Q and R are provided on the bottom plate 128, the substantially central position (the point A in Fig. 3) of the engine compressor unit 129 is disposed in the region Q, and the substantially central position (the point B in Fig. 3) of the power-supply driving compressor 113 is disposed in the region R (see Fig. 2). However, the present disclosure is not limited to this. For example, such an arrangement is also possible in which one region Q is provided on the bottom plate 128, the other region R is provided on the partition plate 103, the substantially central position (the point A in Fig. 3) of the engine compressor unit 129 is disposed in the region Q, and the substantially central position (the point B in Fig. 3) of the power-supply driving compressor 113 is disposed in the region R.

According to an outdoor unit of an air conditioner according to the present disclosure, even in a case where a power-supply driving compressor driven by a motor is additionally disposed in a machine room, a wide interval between an engine compressor unit and the power-supply driving compressor is secured. This reduces exhaust heat that flows from an engine to the power-supply driving compressor, thereby preventing the temperature of the power-supply driving compressor from becoming high. Consequently, a decrease in performance cause by the increase in the temperature of the power-supply driving compressor additionally provided in the machine room of the outdoor unit can be prevented. Therefore, the outdoor unit of the air conditioner according to the present disclosure is suitably applicable to an outdoor unit in which a non-power-supply driving compressor driven by an engine and a power-supply driving compressor driven by a motor are provided in a machine room.

## Claims

1. An outdoor unit (100) of an air conditioner, comprising:
a body housing (100A) defining therein a heat exchanger room (102) and a machine room (101) that further defines two portions divided by a substantially vertical plane that includes a straight line passing a center of a bottom plate (128) provided on a bottom of the machine room (101) and extending in a depth direction of the machine room (101);
a power-supply driving compressor (113) being driven by an electric power; and
a non-power-supply driving compressor unit (129) containing a driving source (111) other than the electric power and a non-power-supply driving compressor (112) being driven by the driving source (111) other than the electric power,
wherein a substantially central position (A) of the non-power-supply driving compressor unit (129) is disposed in one of the two portions of the machine room (101), and a substantially central position (B) of the power-supply driving compressor (113) is disposed in the other one of the two portions of the machine room (101); and
wherein a horizontal direction distance (J1) between a substantially central position (C) of the non-power-supply driving compressor (112) and the substantially central position (B) of the power-supply driving compressor (113) is shorter than a horizontal direction distance (J2) between the substantially central position (A) of the non-power-supply driving compressor unit (129) and the substantially central position (B) of the power-supply driving compressor (113).

2. The outdoor unit (100) according to Claim 1, wherein:
the body housing (100A) is divided into an upper portion and a lower portion;
the machine room (101) is provided in the lower portion; and
the heat exchanger room (102) is provided in the upper portion.

3. The outdoor unit (100) according to Claim 1, wherein at least one vent hole (105a, 105b) is provided in the partition plate (103), the vent hole (105a, 105b) allowing air in the outdoor unit (100) to move between the heat exchanger room (102) and the machine room (101).

4. The outdoor unit (100) according to Claim 3, wherein a ventilation resistance of the vent hole (105a, 105b) during the non-operation of the non-power-supply driving compressor (112) is larger than a ventilation resistance of the vent hole (105a, 105b) during the operation of the non-power-supply driving compressor (112).

5. The outdoor unit (100) according to Claim 1, wherein the oil separator (115) for the non-power-supply-driving-compressor (112) is provided at the heat exchanger room (102).

6. The outdoor unit (100) according to Claim 1, wherein an displacement of the non-power-supply driving compressor (112) is larger than an displacement of the power-supply driving compressor (113).

7. The outdoor unit (100) according to Claim 1, wherein an inside diameter of each of a discharge pipe and a suction pipe included in the non-power-supply driving compressor (112) is larger than an inside diameter of each of a discharge pipe and a suction pipe included in the power-supply driving compressor (113).

## Patentansprüche

1. Außeneinheit (100) einer Klimaanlage, umfassend:
ein Gehäuse (100A), das darin einen Wärmetauscherraum (102) und einen Maschinenraum (101) umgrenzt, der des Weiteren zwei Abschnitte umschließt, die durch eine im wesentlichen vertikale Ebene geteilt werden, die eine gerade Linie einschließt, die ein Zentrum einer Bodenplatte (128) durchläuft, die auf einem Boden des Maschinenraums (101) angeordnet ist und sich in einer Tiefenrichtung des Maschinenraums (101) erstreckt;
einen mit elektrischer Energie betriebenen Kompressor (113), der mittels elektrischer Energie angetrieben wird; und
eine nicht mit elektrischer Energie betriebene Kompressoreinheit (129), die eine andere Antriebsquelle (111) als die elektrische Energie und einen nicht mit elektrischer Energie betriebenen Kompressor (112) enthält, der durch die andere Antriebsquelle (111) als der elektrischen Energie angetrieben wird;
wobei eine im wesentlichen zentrale Position (A) der nicht mit elektrischer Energie betriebenen Kompressoreinheit (129) in einem der beiden Abschnitte des Maschinenraums (101) angeordnet ist, und eine im wesentlichen zentrale Position (B) des mit elektrischer Energie betriebenen Kompressors (113) in dem anderen der beiden Abschnitte des Maschinenraums (101) angeordnet ist; und
wobei ein horizontaler Richtungsabstand (J1) zwischen einer im wesentlichen zentralen Position (C) des nicht mit elektrischer Energie betriebenen Kompressors (112) und der im wesentlichen zentralen Position (B) des mit elektrischer Energie betriebenen Kompressors (113) kleiner als ein horizontaler Richtungsabstand (J2) zwischen der im wesentlichen zentralen Position (A) der nicht mit elektrischer Energie betriebenen Kompressoreinheit (129) und der im wesentlichen zentralen Position (B) des mit elektrischer Energie betriebenen Kompressors (113) ist.

2. Außeneinheit (100) nach Anspruch 1, wobei:
das Gehäuse (100A) in einen oberen Abschnitt und einen unteren Abschnitts unterteilt ist;
der Maschinenraum (101) in dem unteren Abschnitt angeordnet ist; und
der Wärmetauscherraum (102) in dem oberen Abschnitt angeordnet ist.

3. Außeneinheit (100) nach Anspruch 1, wobei mindestens eine Lüftungsöffnung (105a, 105b) in der Raumteilerplatte (103) angeordnet ist, wobei die Lüftungsöffnung (105a, 105b) es der Luft in der Außeneinheit (100) ermöglicht, sich zwischen dem Wärmetauscherraum (102) und dem Maschinenraum (101) zu bewegen.

4. Außeneinheit (100) nach Anspruch 3, wobei ein Belüftungswiderstand der Lüftungsöffnung (105a, 105b) während des Nicht-Betriebs des nicht mit elektrischer Energie betriebenen Kompressors (112) größer als ein Belüftungswiderstand der Lüftungsöffnung (105a, 105b) während des Betriebs des nicht mit elektrischer Energie betriebenen Kompressors (112) ist.

5. Außeneinheit (100) nach Anspruch 1, wobei der Ölabscheider (115) für den nicht mit elektrischer Energie betriebenen Kompressors (112) in dem Wärmetauscherraum (102) angeordnet ist.

6. Außeneinheit (100) nach Anspruch 1, wobei ein Hubraum (displacement) des nicht mit elektrischer Energie betriebenen Kompressors (112) größer als ein Hubraum des mit elektrischer Energie betriebenen Kompressors (113) ist.

7. Außeneinheit (100) nach Anspruch 1, wobei ein Innendurchmesser von jeweils einer Auslassröhre und einer Ansaugröhre, die in dem nicht mit elektrischer Energie betriebenen Kompressors (112) eingeschlossen sind, größer als der Innendurchmesser von jeweils einer Auslassröhre und einer Ansaugröhre ist, die in dem mit elektrischer Energie betriebenen Kompressors (113) eingeschlossen sind.

## Revendications

1. Unité extérieure (100) d'un climatiseur, comprenant :
un boîtier de corps (100A) définissant dans celui-ci un compartiment échangeur de chaleur (102) et un compartiment de machine (101) qui définit en outre deux parties divisées par un plan sensiblement vertical comprenant une ligne droite passant au centre d'une plaque de fond (128) agencée sur un fond du compartiment de machine (101) et s'étendant dans une direction de profondeur du compartiment de machine (101) ;
un compresseur d'entraînement à alimentation en énergie (113) qui est entraîné par une énergie électrique, et
une unité de compresseur d'entraînement sans alimentation en énergie (129) contenant une source d'entraînement (111) autre que l'énergie électrique et un compresseur d'entraînement sans alimentation en énergie (112) qui est entraîné par la source d'entraînement (111) autre que l'énergie électrique,
dans laquelle une position sensiblement centrale (A) de l'unité de compresseur d'entraînement sans alimentation en énergie (129) est disposée dans l'une des deux parties du compartiment de machine (101), et une position sensiblement centrale (B) du compresseur d'entraînement à alimentation en énergie (113) est disposée dans l'autre des deux parties du compartiment de machine (101) ; et
dans laquelle une distance selon une direction horizontale (J1) entre une position sensiblement centrale (C) du compresseur d'entraînement sans alimentation en énergie (112) et la position sensiblement centrale (B) du compresseur d'entraînement à alimentation en énergie (113) est plus courte qu'un distance une direction horizontale (J2) entre la position sensiblement centrale (A) de l'unité de compresseur d'entraînement sans alimentation en énergie (129) et la position sensiblement centrale (B) du compresseur d'entraînement à alimentation en énergie (113).

2. Unité extérieure (100) selon la revendication 1, dans laquelle :
le boîtier de corps (100A) est divisé en une partie supérieure et une partie inférieure ;
le compartiment de machine (101) est agencé dans la partie inférieure ; et
le compartiment échangeur de chaleur (102) est agencé dans la partie supérieure.

3. Unité extérieure (100) selon la revendication 1, dans laquelle au moins un trou d'évent (105a, 105b) est agencé dans la plaque de séparation (103), le trou d'évent (105a, 105b) permettant à de l'air dans l'unité extérieure (100) de se déplacer entre le compartiment échangeur de chaleur (102) et le compartiment de machine (101).

4. Unité extérieure (100) selon la revendication 3, dans laquelle une résistance de ventilation du trou d'évent (105a, 105b) pendant le non-fonctionnement du compresseur d'entraînement sans alimentation en énergie (112) est supérieure à une résistance de ventilation du trou d'évent (105a, 105b) pendant le fonctionnement du compresseur d'entraînement sans alimentation en énergie (112).

5. Unité extérieure (100) selon la revendication 1, dans laquelle le séparateur d'huile (115) pour le compresseur d'entraînement sans alimentation en énergie (112) est agencé au niveau du compartiment échangeur de chaleur (102).

6. Unité extérieure (100) selon la revendication 1, dans laquelle un déplacement du compresseur d'entraînement sans alimentation en énergie (112) est supérieur à un déplacement du compresseur d'entraînement à alimentation en énergie (113).

7. Unité extérieure (100) selon la revendication 1, dans laquelle un diamètre intérieur de chacun parmi un tuyau d'évacuation et un tuyau d'aspiration inclus dans le compresseur d'entraînement sans alimentation en énergie (112) est supérieur à un diamètre intérieur de chacun parmi un tuyau d'évacuation et un tuyau d'aspiration inclus dans le compresseur d'entraînement à alimentation en énergie (113).
